# NEUE EUROPÄISCHE PATENTSCHRIFT

(11) **EP 1 572 558 B2**
(45) Veröffentlichungstag und Bekanntmachung des Hinweises auf die Entscheidung über den Einspruch: **24.03.2010**
(45) Hinweis auf die Patenterteilung: 24.05.2006
(21) Anmeldenummer: 04817370.2
(22) Anmeldetag: 18.11.2004
(51) Int. Cl.: B65G 1/137

(54) **KOMMISSIONIERPLATZ UND VERFAHREN ZUM KOMMISSIONIEREN**
PICKING STATION AND METHOD
POSTE DE PREPARATION DE COMMANDES ET METHODE

(30) Priorität: 07.01.2004 DE 102004001841
(43) Veröffentlichungstag der Anmeldung: 14.09.2005
(73) Patentinhaber: SSI Schäfer Peem GmbH, 8051 Graz (AT)
(72) Erfinder: SCHÄFER, Gerhard, 57290 Neunkirchen (DE)
(74) Vertreter: Wegener, Markus
(86) Internationale Anmeldenummer: PCT/EP2004/013073
(87) Internationale Veröffentlichungsnummer: WO 2005/066046

(56) Entgegenhaltungen:
- DE-A1- 10 136 354
- DE-U1- 29 806 960
- US-A- 1 832 410

## Beschreibung

Die vorliegende Erfindung betrifft einen Kommissionierplatz zum Kommissionieren von Artikeln aus Lagerbehältern in Auftragsbehälter durch eine Kommissionierperson, wobei der Kommissionierplatz an eine Fördertechnik, die eine durch einen Arbeitsbereich der Kommissionierperson hindurchführende Förderbahn aufweist, für Lagerbehälter zum Transport von Lagerbehältern sowie an eine weitere Fördertechnik für Auftragsbehälter angeschlossen ist.

Ferner betrifft die vorliegende Erfindung ein Verfahren zum Kommissionieren an einem solchen Kommissionierplatz.

Außerdem betrifft die vorliegende Erfindung ein Kommissioniersystem.

Ein solcher Kommissionierplatz, ein solches System und solch ein Verfahren zum Kommissionieren sind aus der DE 101 36 354 Al bekannt.

Die DE 101 36 354 A1 zeigt ein Kommissionierverfahren und ein Kommissioniersystem zum Kommissionieren mit einem Behälterlager und einem zugeordneten Regalbediengerät zur Aus- bzw. Einlagerung von Behältern aus dem bzw. in das Behälterlager zu zumindest zwei Kommissionierplätzen.

Der Begriff "Behälter" ist nicht beschränkend anzusehen, sondern soll vielmehr als Beispiel für eine Vielzahl von möglichen Lagereinheiten, wie z.B. Tabletts, Paletten, usw. verstanden werden, die verwendet werden können, um Kommissioniergut zu lagern und zu transportieren. Unter dem Begriff "Artikel" sind all solche Gegenstände zu verstehen, die in einem Behälterlager lagerbar sind. Artikel können z.B. Arzneimittel, Werkzeugteile oder ähnliches sein, die von Kunden in beliebiger Anzahl und Vielzahl bestellt werden können. Diese bestellten Artikel werden dann zu einem einzigen Auftrag zusammengefasst, wobei die Artikel dann in einen Auftragsbehälter kommissioniert werden, der dem Kunden geliefert wird.

Unter einem Kommissionierplatz wird in einem Kommissioniersystem der Ort verstanden, wo eine Kommissionierperson Artikel, die in den Lagerbehältern gelagert sind, entnimmt, um diese dann in bereitgestellte Auftragsbehälter abzulegen.

Unter einem Auftragsbehälter wird ein Behälter verstanden, in den zu kommissionierendes Gut bzw. Artikel gelegt wird bzw. werden. Ein Auftragsbehälter kann eine Vielzahl von verschiedenen Artikeln aufnehmen, bis der ihm zugeordnete Auftrag abgearbeitet ist, d.h. bis alle zum Auftrag gehörenden Artikel aus dem Lager zum Kommissionierplatz transportiert sind und dort von der Kommissionierperson in den entsprechenden Auftragsbehälter gelegt sind.

In jüngster Zeit ist man dazu übergegangen, den Kommissioniervorgang nach dem Prinzip "Ware zum Mann" zu gestalten. Beim Prinzip Ware zum Mann ist der Kommissionierperson ein fester Arbeitsplatz zugewiesen, von dem sie sich so wenig und selten wie möglich wegbewegt. Die zu kommissionierenden Artikel werden zur Kommissionierperson transportiert. Dies steigert die Effizienz des Gesamtsystems und erfüllt die hohen ergonomischen Anforderungen, die heutzutage immer weiter in den Vordergrund treten.

Auch bei der oben genannten DE 101 36 354 werden die Lagerbehälter mittels einer entsprechenden Fördertechnik zu den Kommissionierplätzen transportiert, wo sich die Kommissionierperson stationär aufhält. Die Kommissionierperson arbeitet bei diesem Kommissionierplatz im Stehen. Die Lagerbehälter werden mittels einer Fördertechnik in Arm- bzw. Greifhöhe antransportiert. Die Auftragsbehälter sind in einer tiefer gelegenen Ebene direkt vor der Kommissionierperson "geparkt". Die Auftragsbehälter werden dabei in einem Auftragsbehälter-Puffer geparkt, der bis zu vier Auftragsbehälter aufnehmen kann. Der Auftragsbehälter-Puffer ist ebenfalls mit einer Fördertechnik verbunden, die leere Auftragsbehälter zum Kommissionierplatz hin und fertige Auftragsbehälter vom Kommissionierplatz weg transportiert.

Bevor die Kommissionierperson einem Lagerbehälter einen Artikel entnehmen kann, wird der entsprechende Lagerbehälter von der Lagerbehälter-Fördertechnik, die beispielsweise durch eine Rollenbahn verwirklicht sein kann, in einen Lagerbehälter-Puffer überführt, der ähnlich wie der Auftragsbehälter-Puffer mehrere Lagerbehälter aufnehmen kann und nicht Teil der Fördertechnik ist. Der Lagerbehälter-Puffer ist in einer Ebene über dem Auftragsbehälter-Puffer in einem Bereich angeordnet, wo die Kommissionierperson in die sich im Lagerbehälter-Puffer befindenden Lagerbehälter greifen kann, ohne sich von ihrem Standpunkt fortbewegen zu müssen. Der Lagerbehälter-Puffer ist z.B. in Armreichweite angeordnet. Der Lagerbehälter-Puffer kann bis zu drei Lagerbehälter gleichzeitig aufnehmen, die nebeneinander vor der Kommissionierperson angeordnet werden, so dass diese jederzeit beliebig in einen der Lagerbehälter greifen kann, um einen Artikel zu entnehmen.

Der Lagerbehälter-Puffer ist dabei so ausgebildet, dass die zur Kommissionierperson orientierte Kanten der Lagerbehälter leicht abgesenkt ist, so dass die Kommissionierperson den Inhalt des vor ihr angeordneten Lagerbehälters leichter überblicken kann.

Ein Nachteil dabei ist, dass die Anzahl der Wechselspiele oftmals zu gering ist. Unter einem Wechselspiel wird ein Vorgang verstanden, bei dem aus der Rollenbahn ein Lagerbehälter in den Lagerbehälter-Puffer überführt wird oder aus dem Lagerbehälter-Puffer ein Lagerbehälter an die Rollenbahn übergeben wird. Dies liegt u.a. daran, dass die Anzahl der Lagerbehälter, die im Lagerbehälter-Puffer eingelagert werden können, so gering ist.

Ferner muss für jeden Platz des Lagerbehälter-Puffers eine Ein-/Ausschleusvorrichtung vorgesehen werden, mit deren Hilfe Lagerbehälter zwischen der Förderrollenbahn und dem Lagerbehälter-Puffer übergeben werden können.

Dies hat ebenfalls zur Folge, dass die Gesamteffizienz des Systems leidet.

Es ist daher eine Aufgabe der vorliegenden Erfindung, einen Kommissionierplatz, ein System und ein Verfahren zum Kommissionieren von Artikeln aus Lagerbehältern durch eine Kommissionierperson vorzusehen, wodurch sich die Kommissioniereffizienz unter Beachtung strenger ergonomischer Anforderungen erhöhen lässt.

Diese Aufgabe wird durch einen Kommissionierplatz der eingangs erwähnten Art gelöst, bei dem die Förderbahn zumindest im Arbeitsbereich der Kommissionierperson um ihre Längsachse in Richtung der Kommissionierperson gekippt ist, wobei die Förderbahn eine Ankippeinrichtung aufweist, die in den Arbeitsbereich zu transportierende Lagerbehälter in eine gekippte Lage kippt, wobei die Förderbahn ferner eine Rückkippeinrichtung aufweist, die einen Lagerbehälter aus der gekippten Lage wieder zurückkippt.

Diese Aufgabe wird ferner durch ein Kommissioniersystem gelöst, das mindestens einen erfindungsgemäßen Kommissionierplatz aufweist.

Die Aufgabe wird ferner durch ein Verfahren zum Kommissionieren der eingangs erwähnten Art gelöst, bei dem Lagerbehälter zu einem erfindungsgemäßen Kommissionierplatz transportiert werden, wobei die Lagerbehälter in eine gekippte Lage gebracht werden, bevor sie in den Arbeitsbereich gelangen.

Durch das Ankippen der Förderbahn selbst ist das Vorsehen eines Lagerbehälter-Puffers, insbesondere eines zur Kommissionierperson gekippten Lagerbehälter-Puffers überflüssig. Die Kommissionierperson kann, ohne sich vom Kommissionierplatz fortbewegen zu müssen, ohne Weiteres in zu ihr transportierte Lagerbehälter greifen, um zu kommissionierende Artikel zu entnehmen.

Da der aus dem Stand der Technik bekannte Lagerbehälter-Puffer eingespart ist, können auch die Ein-/Ausschleusvorrichtungen eingespart werden. Die Geschwindigkeit, mit der Lagerbehälter zum Kommissionierplatz transportiert werden können, erhöht sich. Es sind keine Wechselspiele zwischen der Förderbahn und einem Puffer mehr erforderlich. Auch die Problematik, dass lediglich eine begrenzte Anzahl von Lagerbehälter-Pufferplätzen vorhanden ist, erübrigt sich, da die Lagerbehälter direkt über die Förderbahn zur Kommissionierperson gebracht werden und an ihr vorbei "fließen".

Durch das Ankippen der Förderbahn selbst ist es für die Kommissionierperson aus ergonomischen Gesichtspunkten einfach, in den Lagerbehälter zu greifen. Die Kommissionierperson kann den Inhalt des Lagerbehälters bestens überblicken. Sie muss nicht mehr am Kommissionierplatz hin- und herlaufen. Die Ware wird auf eine übersichtliche Art und Weise direkt zu ihr transportiert.

Die Ankippeinrichtung ermöglicht ein schnelles und punktuelles Kippen der Lagerbehälter. Aufgrund des oftmals sehr spärlichen, für den Kommissionierplatz zur Verfügung stehenden Raums ist es oftmals nicht möglich, die Förderbahn über eine ausreichend lange Strecke aus ihrer horizontalen Orientierung in eine gekippte Orientierung überzuführen, da das überführen kontinuierlich geschehen muss. Anderenfalls kommt es zu ungewünschten Torsionskräften in der Bahn, bzw. die in den Lagerbehälter befindlichen Artikel könnten durch all zu abruptes Kippen Schaden nehmen.

Mittels der Ankippeinrichtung kann die Förderbahn erst kurz vor dem Arbeitsbereich gekippt werden. Die Ankippeinrichtung kann regelbar ausgestaltet sein, so dass die Geschwindigkeit, mit der die Lagerbehälter aus ihrer "normalen" horizontalen Orientierung in die gekippte Lage gebracht werden, beliebig variiert werden kann. Dies kann bei leicht zerbrechlichen Artikeln von Bedeutung sein, die bei einem allzu abrupten Kippen des Lagerbehälters möglicherweise an eine Wand des Lagerbehälters prallen und dann zerbrechen.

Ferner ist es bevorzugt, wenn die Förderbahn im Wesentlichen nur im Arbeitsbereich der Kommissionierperson gekippt ist.

Dies hat den Vorteil, dass die Förderbahn im restlichen Bereich normal, d.h. horizontal, orientiert ist, so dass in diesen normalen Bereichen hohe Transportgeschwindigkeiten erzielbar sind. Die Strecken, auf denen die Lagerbehälter somit bei Höchstgeschwindigkeit gefahren werden können, sind somit länger. Das "Hindernis" im Fluss der Lagerbehälter, das durch den Kommissionierplatz, an dem beispielsweise von Hand kommissioniert wird, dargestellt wird, ist somit so klein wie möglich und stört deshalb den Gesamtfluss weniger. Das Hindernis der Lagerbehälter-Puffer wird gänzlich vermieden.

Vorteilhaft ist auch, wenn die Ankippeinrichtung vor dem Arbeitsbereich angeordnet ist.

Wenn die Ankippeinrichtung vor dem Arbeitsbereich angeordnet ist, gelangen die Lagerbehälter bereits in gekippter Lage in den Arbeitsbereich und müssen nicht erst dort gekippt werden. Die Kommissionierperson hat von Anfang an einen guten Überblick über den Inhalt der Lagerbehälter. Sie kann den Inhalt schon von Weitem erkennen und sich auf die anstehende Kommissionsaktion vorbereiten. Ein vorheriges Kippen ermöglicht auch ein vom Kommissioniertakt des Menschen unabhängiges Wirken. Der Kommissionierer bekommt mehrere Lagerbehälter hintereinander in den Arbeitsbereich geliefert, so dass die schwankende Arbeitsgeschwindigkeit des Menschen (und auch der unterschiedliche Arbeitsumfang) optimal durch normales weitertakten ausgeglichen werden kann. Weiterhin ist das Aus- und Einfahren der Lagerbehälter in einen Lagerbehälter-Puffer, wie er aus dem Stand der Technik bekannt ist, überflüssig, so dass Zeit gewonnen und die Sicherheit erhöht wird, so dass insbesondere ein Quetschen und Klemmen von Extremitäten der Kommissionierperson beim Lagerbehälterwechsel von der Lagerbehälter-Fördertechnik in den Lagerbehälter-Puffer und umgekehrt vermieden werden kann.

Durch das zurückkippen in die normale, d.h. horizontale, Lage können die maximalen Geschwindigkeiten der Förderbahn wieder gefahren werden. Der bereits oben erwähnte Fluss wird so wenig wie möglich gehemmt.

Ferner ist es von Vorteil, wenn die Rückkippeinrichtung nach dem Arbeitsbereich angeordnet ist.

Durch die Anordnung nach dem Arbeitsbereich können Lagerbehälter schneller in den Arbeitsbereich hinein- und hinausgelangen.

Das Rückkippen der Lagerbehälter wird erst außerhalb des Arbeitsbereichs durchgeführt.

Gemäß einer bevorzugten Ausführungsform ist die Förderbahn eine Rollenbahn oder ein Förderband.

Bei Rollenbahnen und Förderbändern ist das Ankippen der Bahn im Bereich des Arbeitsplatzes besonders einfach zu bewerkstelligen, ohne dass großer technischer Aufwand betrieben werden muss, wie es z.B. bei Hängeförderern der Fall wäre.

Es hat sich auch als vorteilhaft herausgestellt, wenn die Förderbahn im Arbeitsbereich in Greifhöhe, insbesondere in Brustbis Rüfthöhe der Kommissionierperson, angeordnet ist.

Durch die Anordnung der Förderbahn in Greif- bzw. Hüfthöhe werden die strengen ergonomischen Anforderungen besonders gut erfüllt. Die Kommissionierperson muss sich nicht bücken, um Kommissionierartikel aus den Lagerbehältern zu entnehmen. Unvorteilhafte Rumpfbewegungen werden vermieden. Ermüdungserscheinungen der Kommissionierperson treten weniger schnell auf.

Ferner ist es bevorzugt, wenn der Arbeitsbereich durch die Armreichweite der Kommissionierperson definiert ist.

Dies bedeutet, dass die Kommissionierperson sich nicht recken bzw. strecken muss, um in den Lagerbehältern befindliche Artikel zu erreichen. Die Kommissionierperson kann die zu kommissionierenden Artikel auf einfache Art und Weise greifen, um sie anschließend in bereitgestellte Auftragsbehälter abzulegen.

Auch von Vorteil ist, wenn die Fördertechnik auch Auftragsbehälter, in die Artikel aus den Lagerbehältern hineinkommissioniert werden, zum Kommissionierplatz hin- und/oder wegtransportiert.

Dazu sind entsprechende Schnittstellen vor und nach dem Kommissionierplatz in der Fördertechnik vorzusehen, mit deren Hilfe gemeinsam durch die Fördertechnik transportierte Lagerbehälter und Auftragsbehälter für den Kommissionierplatz getrennt werden können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert.
- Fig. 1: zeigt eine schematische Draufsicht auf einen Kommissionierplatz gemäß der Erfindung;
- Fig. 2: zeigt eine Schnittansicht entlang der Linie II-II der Fig. 1 durch einen Kommissionierplatz gemäß der vorliegenden Erfindung;
- Fig. 3: zeigt schematisch eine perspektivische Teilansicht des Kommissionierplatzes der Fig. 1, wobei insbesondere eine Ankippeinrichtung erkennbar ist; und
- Fig. 4: zeigt eine schematische perspektivische Ansicht eines Kommissioniersystems gemäß der vorliegenden Erfindung, das einen Kommissionierplatz gemäß der Erfindung aufweist.

Ein Kommissionierplatz gemäß der Erfindung wird im Nachfolgenden allgemein mit dem Bezugszeichen 10 bezeichnet.

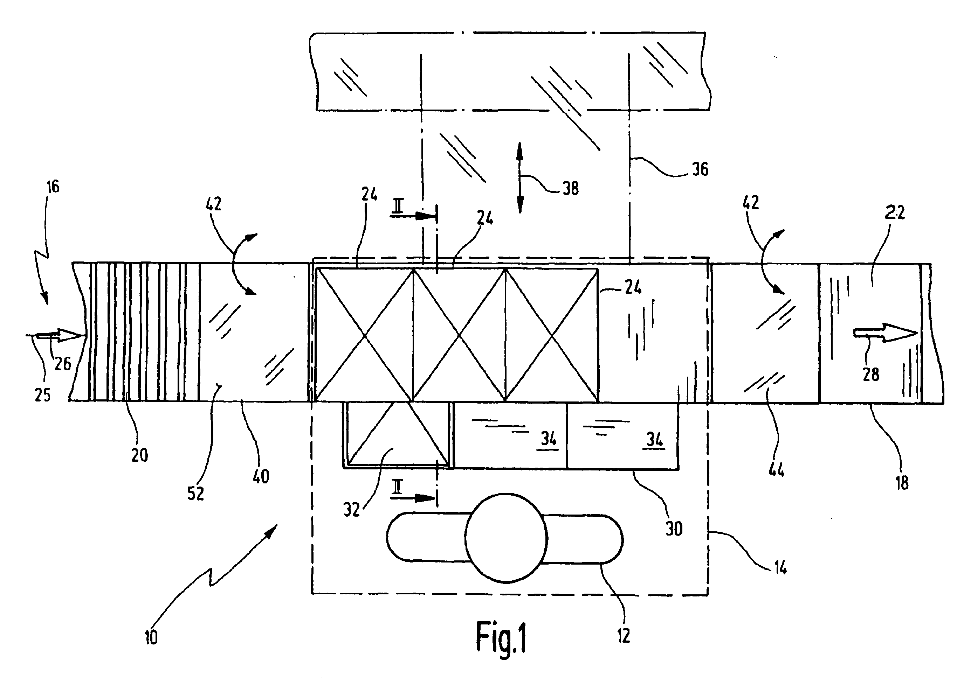

In Fig. 1 ist eine schematische Draufsicht auf einen Kommissionierplatz 10 gemäß der vorliegenden Erfindung gezeigt. Der Kommissionierplatz 10 wird von einer Kommissionierperson 12 bedient, die sich in einem Arbeitsbereich 14 aufhält und in diesem Arbeitsbereich 14 agiert.

Der Arbeitsbereich 14 kann beispielsweise durch die Armreichweite der Kommissionierperson 12 definiert sein. Vorzugsweise bewegt sich die Kommissionierperson 12. nicht von ihrem Standpunkt weg, so dass zu kommissionierende Artikel (nicht dargestellt) in die Reichweite der Hände bzw. Arme der Kommissionierperson 12 gebracht werden müssen.

Der Arbeitsbereich 14 des Kommissionierplatzes 10 wird von einer Fördertechnik 16 durchquert. Die Fördertechnik 16 kann eine Förderbahn 18, z.B. eine Rollenbahn oder ein Förderband, sein. Am linken Rand der Fig. 1 ist eine Rollenbahn 20 schematisch angedeutet, wobei die dunklen Striche die Rollen der Rollenbahn 20 darstellen. Am rechten Rand der Fig. 1 ist schematisch ein Förderband 22 dargestellt. Es versteht sich, dass normalerweise lediglich ein Typ einer Förderbahn bzw. Fördertechnik in einem Kommissioniersystem verwendet wird. Eine Kombination ist jedoch auch möglich.

Ferner erkennt man in der Fig. 1 Lagerbehälter 24, die durch mit einem Kreuz versehene Rechtecke dargestellt sind. Die Lagerbehälter 24 werden im Beispiel der Fig. 1 von links in Richtung eines Pfeils 26 über die Rollenbahn 20 zum Kommissionierplatz 10 transportiert. Der Pfeil 26 ist parallel zur Längsachse 25 der Förderbahn 18 orientiert. Der Abtransport der Lagerbehälter 24 erfolgt entlang eines Pfeils 28. Die Lagerbehälter 24 werden abtransportiert, wenn die Kommissionierperson 12 im Arbeitsbereich 14 die erforderliche Anzahl von zu kommissionierenden Artikeln (nicht dargestellt) aus einem entsprechenden Lagerbehälter 24 entnommen hat. Unterhalb der Förderbahn 18 ist im Arbeitsbereich 14 ein Puffer 30 für Auftragsbehälter 32 angeordnet. Der Puffer 30 weist im hier gezeigten Beispiel drei Pufferplätze 34 auf, von denen lediglich der in der Fig. 1 links dargestellte Pufferplatz 34 mit einem Auftragsbehälter 32 belegt ist. Die Auftragsbehälter 32 werden mittels einer weiteren Fördertechnik 36 in den Arbeitsbereich 14 hinein und aus dem Arbeitsbereich 14 heraus transportiert, wie es durch einen Pfeil 38 schematisch angedeutet ist.

Kurz vor dem Arbeitsbereich 14 ist eine Ankipp- bzw. Kippeinrichtung 40 vorgesehen, die Teil der Förderbahn 18 ist. Mit Hilfe der Kippeinrichtung 40 können Lagerbehälter 24, die sich auf der Kippeinrichtung 40 befinden, in eine gekippte Lage gebracht werden. Dazu kann die Kippeinrichtung in Richtung eines Pfeils 42 gekippt werden.

Kurz nach dem Arbeitsbereich 14 ist eine Rückkippeinrichtung 44 vorgesehen, die ebenfalls Teil der Förderbahn 18 ist. Mit Hilfe der Rückkippeinrichtung 44 können Lagerbehälter 24 aus der gekippten Lage in eine horizontale Lage zurückgekippt werden.

Die horizontale Lage stellt in der Regel die normale Lage eines Lagerbehälters 24 in einem Kommissioniersystem dar.

Nachfolgend wird kurz der Ablauf eines Kommissioniervorgangs am Kommissionierplatz 10 anhand eines Beispiels erläutert werden.

Lagerbehälter 24, die zu kommissionierende Artikel enthalten, werden von einem hier nicht dargestellten, übergeordneten Lagerverwaltungssystem aus einem Lager, das hier ebenfalls nicht dargestellt ist, angefordert und über die Fördertechnik 16 zum Kommissionierplatz 10 transportiert. Gleichzeitig oder zuvor werden leere oder angearbeitete Auftragsbehälter 32 über eine Fördertechnik 36 in den Auftragsbehälter-Puffer 30 transportiert. Die Fördertechniken 16 und 36 können identisch sein. Auch dieser Vorgang wird von der übergeordneten Lagerverwaltung koordiniert. Die übergeordnete Lagerverwaltung kann beispielsweise von einem Großrechner oder einem PC organisiert werden, der über eine entsprechende Lagerverwaltung-Software verfügt.

Die Lagerbehälter 24 werden über die Rollenbahn 20 zum Kommissionierplatz 10 bzw. Arbeitsbereich 14 vorzugsweise mit Höchstgeschwindigkeit und bereits in der richtigen Reihenfolge transportiert.

Um die Lagerbehälter 24 in eine gekippte Lage zu bringen, die für die Kommissionierperson 12 überschaubar und ergonomisch günstig ist, ist kurz vor dem Arbeitsbereich 14 die Ankipp- bzw. Kippeinrichtung 40 angeordnet. Dies kann z.B. unmittelbar vor oder auch einige Lagerbehälterlängen zur Errichtung einer Art seriellen Puffers vor dem Arbeitsbereich 14 sein.

Die in Fig. 1 dargestellte Kippeinrichtung 40 lässt sich so um die Längsachse 25 der Förderbahn 18 kippen, dass eine der Kommissionierperson 12 zugewandte Kante des Lagerbehälters 24 tiefer liegt als eine der Kommissionierperson 12 abgewandte Kante des Lagerbehälters 24. Im Beispiel der Fig. 1 bedeutet dies, dass die untere, zur Kommissionierperson nächst gelegene Kante des Lagerbehälters 24 tiefer angeordnet ist als die obere Kante. Die Kippeinrichtung 40 weist Mittel zum Transportieren eines auf ihr deponierten Lagerbehälters 24 in Richtung des Pfeils 26 auf. Ferner weist sie z.B. pneumatische, hydraulische oder elektromechanische Mittel zum Ankippen einer Fläche 52 auf, auf der Lagerbehälter 24 von der Förderbahn 18 abgesetzt werden können oder auf die Lagerbehälter 24 gezogen, gefördert oder transportiert werden.

Nachdem die Kippeinrichtung 40 in die gekippte Lage gebracht worden ist, und somit auch ein sich auf ihr befindlicher Lagerbehälter 24, wird der Lagerbehälter 24 in Richtung des Pfeils 26 in den Arbeitsbereich 14 hineingeführt. Dort kann die Kommissionierperson 12 in den Lagerbehälter 24 greifen, um einen oder mehrere zu kommissionierende Artikel (nicht dargestellt) zu entnehmen. Der oder die entnommenen Artikel können anschließend von der Kommissionierperson 12 in einen bereitstehenden Auftragsbehälter 32 abgelegt werden. Sollten noch weitere Artikel in den Auftragsbehälter zu kommissionieren sein, werden die entsprechenden Lagerbehälter 24 auf die oben beschriebene Weise in den Arbeitsbereich 14 transportiert.

Die Lagerbehälter 32 selbst können auch in mehrere Bereiche unterteilt sein, die verschiedene Artikel enthalten.

Deshalb kann der Kommissionierplatz 10 ferner eine Lichtquelle, wie z.B. einen Laser, aufweisen, der über der Kommissionierperson 12 angeordnet ist, um den Lagerbehälter 32 auszuleuchten. Anhand der gezielten Ausleuchtung des Lagerbehälters 32 weiß die Kommissionierperson 12 sofort, welchen Artikel sie zu greifen hat. Mittels derselben Technik kann auch der Zielort, d.h. ein Auftragsbehälter 32 selbst, oder sollte dieser ebenfalls in mehrere Bereiche unterteilt sein, einer dieser Bereiche angezeigt werden. Eine solche optische Vorrichtung ist in den Figuren nicht gezeigt, kann jedoch optional vorgesehen werden.

Wenn alle für den Abschluss eines Auftrags erforderlichen Artikel in den entsprechenden Auftragsbehälter 32 kommissioniert sind, wird dieser von der Fördertechnik 36 aus dem Puffer 30 wegtransportiert, und ein neuer, leerer oder angearbeiteter Auftragsbehälter 32 kann mittels der Fördertechnik 36 in den Puffer 30 transportiert werden.

Der Lagerbehälter 32, aus dem der zu kommissionierende Artikel entnommen wurde, wird nach der Entnahme in Richtung der Pfeile 26 bzw. 28 aus dem Arbeitsbereich 14 heraus transportiert.

Direkt im Anschluss an den Arbeitsbereich 14 ist die Rückkippeinrichtung 44 vorgesehen. Die Rückkippeinrichtung 44 ist dazu zuvor in ihre gekippte Lage gebracht worden. Der Lagerbehälter 24 wird auf die Rückkippeinrichtung 44 gefahren. Die Rückkippeinrichtung 44 kippt den Lagerbehälter 24 in die normale Lage zurück.

Auch die Rückkippeinrichtung 44 verfügt über Mittel, um den Lagerbehälter 24 in Richtung des Pfeils 28 auf die Förderbahn 18 zu bewegen bzw. den Lagerbehälter 24 aus dem Arbeitsbereich 14 abzuholen. Ferner weist die Rückkippeinrichtung 44, genauso wie die Ankippeinrichtung 40, Mittel zum Kippen der Fläche um die Längsachse 25 auf, auf der der Lagerbehälter 24 steht.

Nachdem der Lagerbehälter 24 in die normale Lage zurückgekippt wurde, wird er mittels der Förderbahn 18, hier mittels eines Förderbands 22, wieder in das hier nicht dargestellte Regallager zur Einlagerung zurückgeführt.

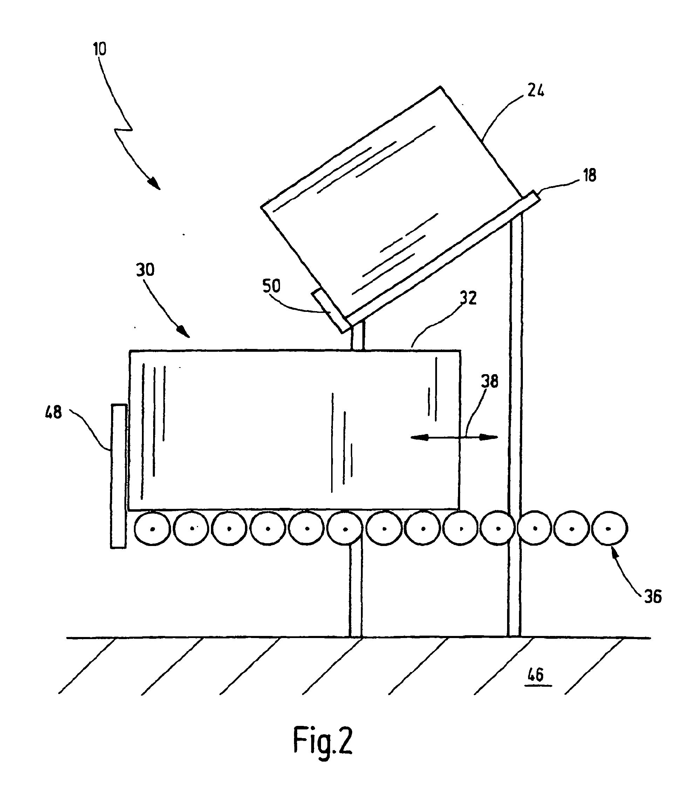

In Fig. 2 ist eine Schnittansicht entlang der Linie II-II der Fig. 1 gezeigt.

In der Fig. 2 erkennt man deutlich, dass die Förderbahn 18 gegenüber dem Boden 46 schräg orientiert ist. Unterhalb der Förderbahn 18 ist die weitere Fördertechnik 36 angeordnet, mit der die Auftragsbehälter 32 in den Auftragsbehälter-Puffer 30 entlang des Pfeils 38 transportiert werden. In der Fig. 2 erkennt man die Vorderseite 48 des Puffers 30, die einen Anschlag für die Auftragsbehälter 42 bildet. Auch die zumindest im Arbeitsbereich 14 schräg gestellte Förderbahn 18 weist im Bereich des Kommissionierplatzes 10 einen Anschlag 50 auf, durch den die Lagerbehälter 24 an einem Abrutschen von der Förderbahn 18 gehindert werden.

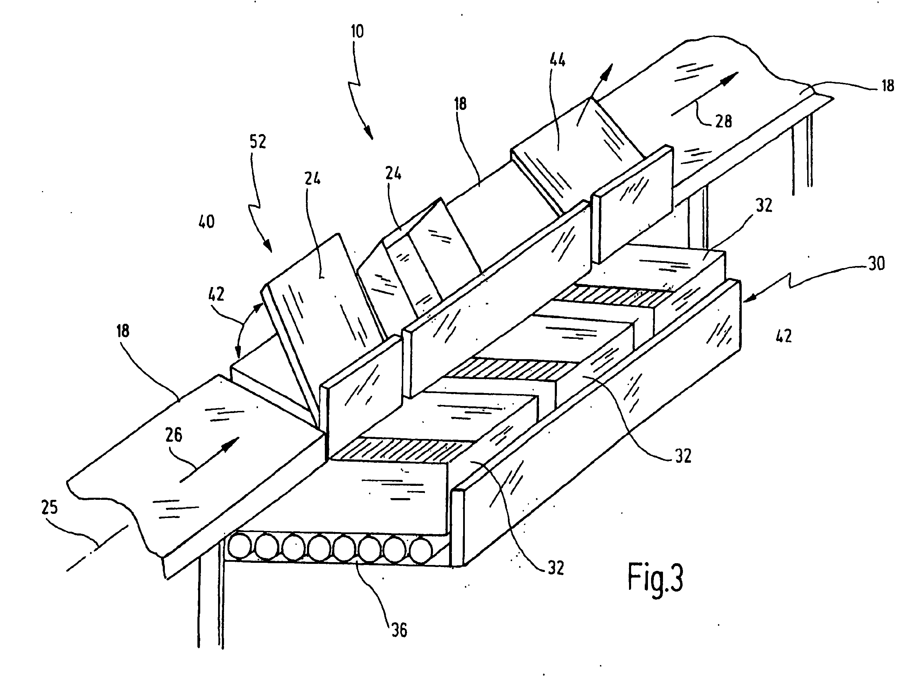

In der Fig. 3 ist der Kommissionierplatz 10 der Fig. 1 schematisch in einer perspektivischen Ansicht gezeigt.

Man erkennt deutlich die Ankippeinrichtung 40, die in der in der Fig. 3 dargestellten Situation nach oben gekippt ist, d.h. sich in ihrer angekippten Lage befindet. Die Kippfläche 52, über die der Lagerbehälter 24 gekippt werden, bildet in gekippter Lage der Ankippeinrichtung 40 eine Ebene mit dem Teil der Förderbahn 18, die durch den Arbeitsbereich 14 des Kommissionierplatzes 10 hindurchführt. Ferner weist die Ankippeinrichtung 40 vorzugsweise einen Anschlag 54 auf, der verhindert, dass auf der Fläche 52 befindliche Lagerbehälter 24 von der Förderbahn rutschen können.

Auch die Rückkippeinrichtung 44 ist in ihrer gekippten Lage in der Ebene des Teils der Förderbahn 18, die durch den Arbeitsbereich 14 hindurchführt, orientiert. In ihrer normalen Lage ist sie horizontal orientiert.

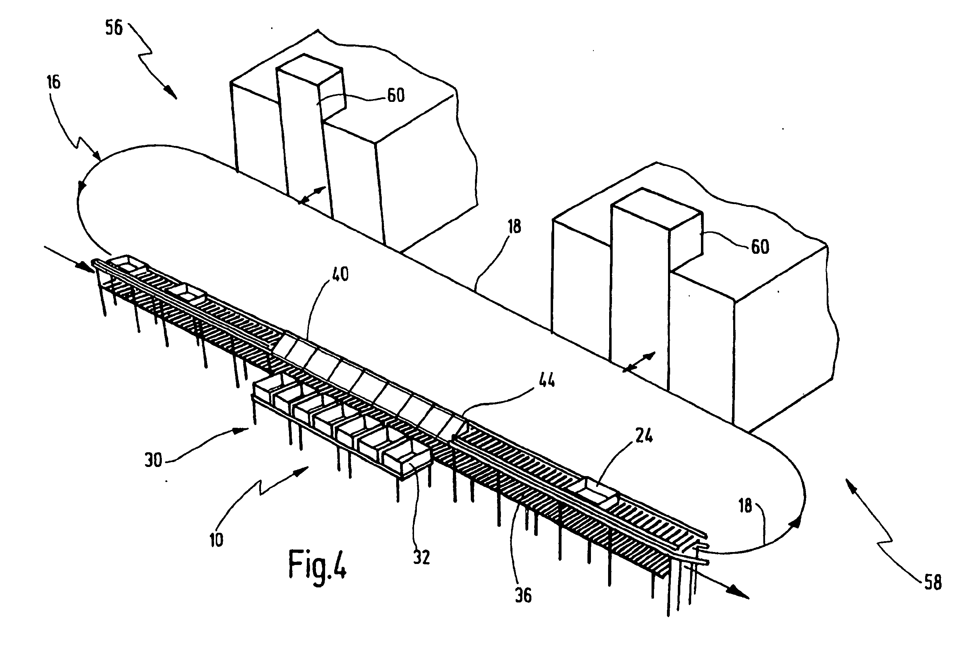

Fig. 4 zeigt schematisch eine perspektivische Teilansicht eines erfindungsgemäßen Kommissioniersystems 56. Das Kommissioniersystem 56 umfasst einen erfindungsgemäßen Arbeitsplatz 10, eine Fördertechnik 16 für Lagerbehälter 24, eine Fördertechnik 36 für Auftragsbehälter 32 und ein Regallager 58.

Das Regallager 58 besteht aus einer Vielzahl von Lagerregalen, die hier gassenförmig angeordnet sind. Die Regale selbst sind z.B. sogenannte Karusselle. Bei Karussellen lassen sich die Regalspalten um eine vertikal orientierte Achse drehen, so dass sich immer eine Regalspalte an die Stirnseite des Regals drehen lässt. An der Stirnseite des Regals sind sogenannte Vertikallifte 60 vorgesehen, mit deren Hilfe Lagerbehälter 24 aus dem Regallager 58 aus jeder beliebigen Höhe entnehmbar sind. Die Lifte 60 transportieren die entnommenen Lagerbehälter 24 auf eine Übergabehöhe, wo die Lagerbehälter an die Fördertechnik 16 übergeben werden können.

Mittels der Fördertechnik 16 für Lagerbehälter 24 werden die Lagerbehälter 24 zum Kommissionierplatz 10, vorzugsweise in normaler Lage, transportiert. Örtlich kurz bevor die Lagerbehälter 24 in den Arbeitsbereich 14 des Kommissionierplatzes 10 gelangen, ist die Kippeinrichtung 40 angeordnet.

Wie im Zusammenhang mit den Figuren 1 bis 3 bereits erläutert, kippt die Kippeinrichtung 40 die Lagerbehälter 24 in die gekippte Lage und gibt die Lagerbehälter 24 in gekippter Lage an den Teil der Förderbahn 18 ab, der den Arbeitsbereich 14 des Kommissionierplatzes 10 passiert.

Mittels der Fördertechnik 36 werden die Auftragsbehälter 32 zum Kommissionierplatz 10 transportiert, um nach Abschluss eines Kommissioniervorganges wieder abtransportiert zu werden.

Lagerbehälter 24, aus denen zu kommissionierende Artikel bereits entnommen wurden, werden mittels der Förderbahn 18 wieder aus dem Arbeitsbereich 14 heraustransportiert. Im Anschluss an den Arbeitsbereich 14 ist die Rückkippeinrichtung 44 angeordnet. Die Rückkippeinrichtung 44 kippt die Lagerbehälter 24 in ihre normale Lage zurück. Die Lagerbehälter 24 werden anschließend wieder in das Lagerregal 58 zurückgeführt.

Es versteht sich, dass verschiedene Typen von Fördertechniken eingesetzt werden könnten.

Auch die Größe des Kommissionierplatzes 10, insbesondere des Arbeitsbereiches 14, lässt sich variieren. So könnte z.B. der Arbeitsbereich 14 vergrößert werden, indem man zulässt, dass die Kommissionierperson 12 auch einen Schritt nach links und rechts machen darf, um Artikel aus den Lagerbehältern zu entnehmen. Dementsprechend länger müsste die Förderbahn 18 ausgelegt sein, die durch den Arbeitsbereich 14 führt.

Es versteht sich, dass die Lagerbehälterebene und Auftragsbehälterebene vertauscht werden können. Die Neigung der Lagerbehälter als auch der Auftragsbehälter (z.B. beim Schlichten in der Box) ist ebenfalls möglich. Die Höhe, in der die Lagerbehälter in den Arbeitsbereich des Kommissionierplatzes geliefert werden, ist anpassbar.

Auch die Größe des Puffers 30 für die Auftragsbehälter 32 lässt sich variieren. Je nach Größe der Auftragsbehälter können unterschiedlich viel Auftragsbehälter vom Puffer 30 aufgenommen werden. Ähnliches gilt natürlich auch für die Größe der Lagerbehälter 24.

## Patentansprüche

1. Kommissionierplatz (10) zum Kommissionieren von Artikeln aus Lagerbehältern (24) in Auftragsbehälter (32) durch eine Kommissionierperson (12), wobei der Kommissionierplatz (10) an eine Fördertechnik (16), die eine durch einen Arbeitsbereich (14) der Kommissionierperson (12) hindurchführende Förderbahn (18, 20, 22) aufweist, für Lagerbehälter (24) zum Transport von Lagerbehältern (24) sowie an eine weitere Fördertechnik (36) für Auftragsbehälter (32) angeschlossen ist, **dadurch gekennzeichnet, dass** die Förderbahn (18, 20, 22) zumindest im Arbeitsbereich (14) der Kommissionierperson (12) um ihre Längsachse (25) in Richtung der Kommissionierperson (12) gekippt ist, dass die Förderbahn (18, 20, 22) eine Ankippeinrichtung (40) aufweist, die in den Arbeitsbereich (14) zu transportierende Lagerbehälter (24) in eine gekippte Lage kippt und dass die Förderbahn (18, 20, 22) ferner eine Rückkippeinrichtung (44) aufweist die eine Lagerbehälter (24) aus der gekippten Lage wieder zurückkippt.

2. Kommissionierplatz nach Anspruch 1, **dadurch gekennzeichnet, dass** die Förderbahn (18, 20, 22) im Wesentlichen nur im Arbeitsbereich (14) der Kommissionierperson (12) gekippt ist.

3. Kommissionierplatz nach Anspruch 1, **dadurch gekennzeichnet, dass** die Ankippeinrichtung (40) vor dem Arbeitsbereich (14) angeordnet ist.

4. Kommissionierplatz nach Anspruch 1, **dadurch gekennzeichnet, dass** die Rückkippeinrichtung (44) nach dem Arbeitsbereich (14) angeordnet ist.

5. Kommissionierplatz nach einem der vorherigen Ansprüche, **dadurch gekennzeichnet, dass** die Förderbahn (18, 20, 22) eine Rollenbahn (20) oder ein Förderband (18) ist.

6. Kommissionierplatz nach einem der vorherigen Ansprüche, **dadurch gekennzeichnet, dass** die Förderbahn (18, 20, 22) im Arbeitsbereich (14) in Greifhöhe, insbesondere in Brust- bis Hüfthöhe, der Kommissionierperson (12) angeordnet ist.

7. Kommissionierplatz nach einem der vorherigen Ansprüche, **dadurch gekennzeichnet, dass** der Arbeitsbereich (14) durch die Armreichweite der Kommissionierperson (12) definiert ist.

8. Kommissionierplatz nach einem der vorherigen Ansprüche, **dadurch gekennzeichnet, dass** die Fördertechnik (18, 20, 22) auch Auftragsbehälter (32), in die Artikel aus den Lagerbehältern (24) hineinkommissioniert werden, zum Kommissionierplatz (10) hin- und /oder wegtransportiert.

9. Kommissionierplatz nach einem der vorherigen Ansprüche, **dadurch gekennzeichnet, dass** die Auftragsbehälter (32) im Arbeitsbereich (14) der Kommissionierperson (12) ebenfalls gekippt sind.

10. Kommissionierplatz nach einem der vorhergehenden Ansprüche, **dadurch gekennzeichnet dass** die Fördertechniken automatisiert sind.

11. Kommissioniersystem (56) mit mindestens einem Kommissionierplatz (10) nach einem der Ansprüche 1 bis 10.

12. Verfahren zum Kommissionieren, wobei Lagerbehälter (24) zu einem Kommissionierplatz (10) nach einem der Ansprüche 1 bis 10 transportiert werden, **dadurch gekennzeichnet, dass** die Lagerbehälter (24) in eine gekippte Lage gebracht werden, bevor sie in den Arbeitsbereich (14) gelangen.

## Claims

1. Order picking station (10) for picking articles from storage containers (24) into order containers (32) by an order picking person (12), wherein the order picking station (10) is connected to a storage container (24) conveyor (16), which comprises a conveyor line (18, 20, 22) passing through a working area (14) of the order picking person (12), for transporting storage containers (24), as well as to another order-container (32) conveyor (36), **characterized in that** the conveyor line (18, 20, 22) is tilted at least in the working area (14) of the order picking person (12) around its longitudinal axis (25) towards the order picking person (12), that the conveyor line (18, 20, 22) comprises a tilting device (40) which tilts storage containers (24) which are to be delivered to the working area (14) into a tilted position and that the conveyor line (18, 20, 22) further comprises a tilt-back device (44) for tilting back a storage container (24) from the tilted position.

2. The order picking station of claim 1, **characterized in that** the conveyor line (18, 20, 22) is substantially tilted in the working area (14) of the order picking person (12) only.

3. The order picking station of claim 1, **characterized in that** the tilting device (40) is located in front of the working area (14).

4. The order picking station of claim 1, **characterized in that** the tilt-back device (44) is arranged subsequent to the working area (14).

5. The order picking station of one of the preceding claims, **characterized in that** the conveyor line (18, 20, 22) is a roller line (20) or a conveyor belt (18).

6. The order picking station of one of the preceding claims, **characterized in that** the conveyor line (18, 20, 22) is arranged in the working area (14) at handling height, particularly in a height from chest to hip, of the order picking person (12).

7. The order picking station of one of the receding claims, **characterized in that** the working area (14) is defined by the arm reach of the order picking person (12).

8. The order picking station of one of the preceding claims, **characterized in that** the conveyor (18, 20, 22) also transports order containers (32) into which the articles are picked from the storage containers (24), to and/or away from the order picking station (10).

9. The order picking station of one of the preceding claims, **characterized in that** the order containers (32) are also tilted within the working area (14) of the order picking person (12).

10. The order-picking station of one of the preceding claims **characterized in that** the conveyors are automated.

11. An order picking system (56) having at least one order picking station (10) of one of claims 1 to 10.

12. Method for order picking, wherein order containers (24) are delivered to an order picking station (10) of one of claims 1 to 10, **characterized in that** the storage containers (24) are brought into a tilted position before they reach the working area (14).

## Revendications

1. Poste (10) de préparation à l'expédition pour préparer à l'expédition des articles provenant de récipients de stockage (24) dans des récipients d'expédition (32) par un personnel de préparation (12), le poste de préparation (10) étant raccordé à un équipement de transport, qui présente une voie de transport (18, 20, 22) traversant une zone de travail (14) du personnel de préparation (12), destiné au transport de récipients de stockage (24), ainsi qu'à un autre équipement de transport (36) destiné à des récipients d'expédition (32), **caractérisé en ce qu'**au moins dans la zone de travail (14) du personnel de préparation (12), la voie de transport (18, 20, 22) est inclinée autour de son axe longitudinal (25) en direction du personnel de préparation (12), **en ce que** la voie de transport (18, 20, 22) présente un dispositif d'inclinaison (40) qui incline, dans une position inclinée, des récipients de stockage (24) à transporter dans la zone de travail (14) et **en ce que** la voie de transport (18, 20, 22) présente de plus un dispositif de rétablissement (44) qui rétablit un récipient de stockage (24) depuis la position inclinée.

2. Poste de préparation selon la revendication 1, **caractérisé en ce que** la voie de transport (18, 20, 22) est inclinée pour l'essentiel seulement dans la zone de travail (14) du personnel de préparation (12).

3. Poste de préparation selon la revendication 1, **caractérisé en ce que** le dispositif d'inclinaison (40) est placé avant la zone de travail (14).

4. Poste de préparation selon la revendication 1, **caractérisé en ce que** le dispositif de rétablissement (44) est placé après la zone de travail (14).

5. Poste de préparation selon l'une des revendications précédentes, **caractérisé en ce que** la voie de transport (18, 20, 22) est une voie à rouleaux (20) ou un tapis de transport (18).

6. Poste de préparation selon l'une des revendications précédentes, **caractérisé en ce que** la voie de transport (18, 20, 22) est placée dans la zone de travail (14) à hauteur d'homme, en particulier à hauteur de la poitrine ou des hanches du personnel de préparation (12).

7. Poste de préparation selon l'une des revendications précédentes, **caractérisé en ce que** la zone de travail (14) est définie par la portée des bras du personnel de préparation (12).

8. Poste de préparation selon l'une des revendications précédentes, **caractérisé en ce que** l'équipement de transport (18, 20, 22) transporte également vers et/ou depuis le poste de préparation (10) des récipients d'expédition (32) dans lesquels les articles sont placés depuis les récipients de stockage (24).

9. Poste de préparation selon l'une des revendications précédentes, **caractérisé en ce que** les récipients d'expédition (32) sont également inclinés dans la zone de travail (14) du personnel de préparation (12).

10. Poste de préparation selon l'une des revendications précédentes, **caractérisé en ce que** les équipements de transport sont automatisés.

11. Système de préparation à l'expédition (56) avec au moins un poste de préparation selon l'une des revendications 1 à 10.

12. Procédé de préparation à l'expédition, dans lequel des récipients de stockage (24) sont transportés jusqu'à un poste de préparation (10) selon l'une des revendications 1 à 10, **caractérisé en ce que** les récipients de stockage (24) sont mis dans une position inclinée avant qu'ils arrivent dans la zone de travail (14).
